# EUROPEAN PATENT SPECIFICATION

(11) **EP 0 748 564 B1**
(45) Date of publication and mention of the grant of the patent: **04.07.2001**
(21) Application number: 95910619.6
(22) Date of filing: 06.03.1995
(51) Int. Cl.: H04N 7/01

(54) **VIDEO SIGNAL PROCESSING**
FERNSEHSIGNALBEARBEITUNG
TRAITEMENT DE SIGNAUX VIDEO

(30) Priority: 04.03.1994 GB 9404190
(43) Date of publication of application: 18.12.1996
(60) Divisional application: 00127230.1
(73) Proprietor: SNELL & WILCOX LIMITED, Twickenham, Middlesex TW1 1RQ (GB)
(72) Inventor: THOMSON, Rod, Chichester West Sussex PO18 9HU (GB)
(74) Representative: Garratt, Peter Douglas
(86) International application number: GB9500478
(87) International publication number: WO9524100

(56) References cited:
- EP-A- 0 576 080
- GB-A- 2 240 232
- US-A- 4 982 280

## Description

This invention relates to video signal processing.

It is well known that a variety of video processes which are optimised for video material having a particular temporal sampling rate, can function differently - and usually less well - with video material transferred from film or converted in some other way from an original temporal sampling rate which was lower. If the origins of the video material which is to be processed are known, the process can be appropriately optimised at the outset. A difficulty arises where the origins of the material are unknown or where the video material is a compilation of material having different origins. Video material which originated from film (whether 24 Hz, 25 Hz or 30 Hz), slow motion replays and animation will usually have repeating images which will lead to sub-optimal performance in particular video processes, unless correctly identified. There is disclosed in US-A-4 982 280 a technique for identifying repeated images by subtracting corresponding pixels from different fields and looking for patterns in the subtraction results.

It is an object of the present invention to provide a relatively straightforward yet reliable method of detecting, in a video signal having a particular temporal sampling rate, the residual effect of a past conversion from a lower temporal sampling rate involving the repetition of images.

Accordingly, the present invention consists in a method of detecting, in a video signal having a particular temporal sampling rate, the residual effect of a past conversion from a lower temporal sampling rate involving the repetition of images, comprising the steps of measuring a motion parameter between successive images, determining a difference value between successive measured motion parameters; comparing the motion parameter and difference values and accumulating the results of said comparison.

Preferably, the motion parameter comprises the average magnitude of the motion vectors.

Suitably, the results of the comparison are accumulated by monitoring a trend in the sign of the comparison.

This invention can operate using any of a wide variety of known techniques for splitting a picture into blocks and measuring a motion vector between these blocks in successive images. The average vector magnitude is calculated from the motion vectors measured between every successive image. The magnitude of the temporal differential of the average vector magnitude is calculated and this number is subtracted from the average vector magnitude. It is to be expected that in "true" video material the temporal differential of the average vector magnitude will tend to be less than the average vector magnitude. The subtraction will therefore generally produce a positive result and by noting a trend of positive results, the material can be inferred as video originating.

In the case of material which was originated as film, the average vector magnitude will switch from a value which is representative of the picture content to an artificially low value (theoretically zero) where motion is measured between two fields which originate from the same film frame. With this variation, the differential of the average vector magnitude will be generally high compared to the average vector magnitude itself. Accordingly, subtracting the differential measurement from the actual measurement will produce a zero or negative result and a tendency towards negative results will enable detection of film originating material.

In converting from 24 Hz film to 60 Hz NTSC, it is usual to employ the well known 3:2 pulldown sequence. For subsequent video processing, it is desirable not only to detect the character of the film originating material but also to identify the precise phase in the field duplicating and reordering sequence that arises from the 3:2 pulldown process.

Apparatus which detects the phase of the 3:2 pulldown sequence already exists and reference is directed for example to WO/91 06182. Known approaches generally compare fields from successive video frames to derive a field difference signal which will be expected to be small in the case of duplicate fields added in the 3:2 pulldown. A logic arrangement is then provided to identify a repeating pattern in the sequence of field difference signals. It is an object of certain embodiments of the present invention to provide an alternative method for identifying the phase of the field duplicating and reordering sequence in video material resulting from a 3:2 pulldown process.

Accordingly, the present invention advantageously further comprises the steps of storing a sequence of measured motion parameters for successive fields; comparing the pattern of motion parameters with known patterns associated respectively with different phases of the 3:2 pulldown field duplicating and reordering sequence and selecting the phase providing the closest match.

The present invention will now be described by way of example with reference to the accompanying drawings in which:-
Figure 1 is a block diagram illustrating apparatus according to one aspect of the present invention, for distinguishing between video originated and film originated material;
Figure 2 is a block diagram illustrating apparatus according to a further aspect of this invention for identifying the phase of a 3:2 pulldown sequence and Figure 3 is a block diagram illustrating, in more detail, one component of the apparatus of Figure 2.

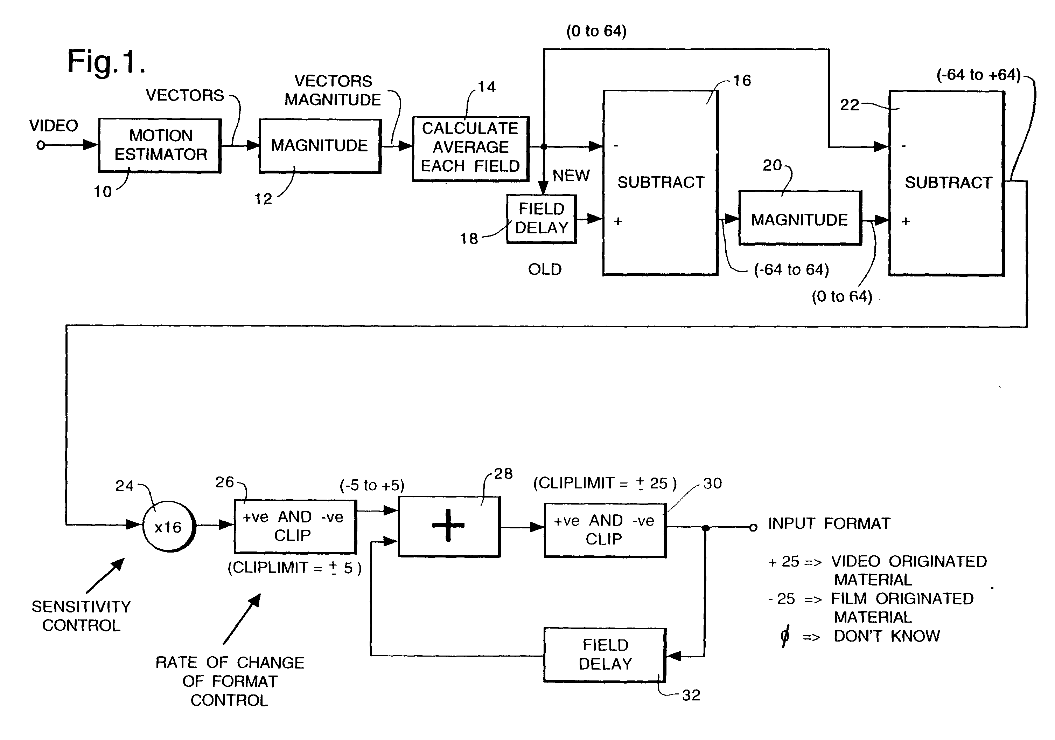

Referring initially to Figure 1, video material passes to a motion estimator 10 which generates motion vectors. The motion estimator can take a wide variety of known forms with a particularly suitable technique being that of phase correlation as disclosed, for example, in GB-B-2 188 510. The magnitude of the motion vectors derived by the motion estimator 10 is calculated in block 12 and these magnitudes are averaged for each field in block 14. The field-averaged vector magnitude, which can be regarded as a motion parameter for that field, is taken directly as one input to subtracter 16 and via a field delay 18 to form the other input of the subtracter. The output of the subtracter, which is then the difference in the motion parameter for successive fields, is then passed through block 20 which serves to extract the magnitude. A further subtracter 22 takes as its positive input, the current motion parameter and as its negative input the magnitude of the difference signal.

As has been previously noted, a tendency to positive results in the subtracter 22 will be indicative of video originating material whilst a tendency towards negative results will be indicative of film originating material. The remainder of the circuit shown in Figure 1 is concerned with identifying these tendencies in a manner which is reliable, which responds in a proper manner to cuts between film originated and video originated material and which deals in a sensible manner with picture material having finite but unusually low movement.

Thus, the output of subtracter 22 passes through multiplier 24 performing a x 16 operation. As will be described subsequently, the choice of coefficient for the multiplier affords a degree of sensitivity control for process. The output of the multiplier 24 passes to block 26 which serves to clip the signal in both positive and negative senses. In this case, the clipping occurs at ± 5 although, as will be described, the choice of clip limits provides a measure of control over the rate at which apparent changes between video originated and film originated material are detected. The clip signal from block 26 is accumulated and further clipped in an arrangement which comprises an adder 28, a clipper 30 and a field delay 32. The output of clipper 26 passes through adder 28 to a further clipper 30 which has a clip limit of ± 25. The adder 28 receives as its second input the output of the clipper 30 passed through the field delay 32.

In the case of video originating material having constant motion, the differential vector magnitude will be zero and, with the gain afforded by multiplier 24, the output from clipper 26 will be continuously + 5. It will be seen that after 5 cycles, the output of the clipper 30 will reach and will be held at the positive clip limit of + 25. In the more normal case in which there is varying motion, the motion vector differential will be non-zero but nonetheless smaller on average than the actual motion vector magnitude. The sensitivity provided by multiplier 24 is selected so that in most cases, the output of clipper 26 remains at the positive clip limit so that a rate of change of 5 cycles, (from the zero condition) still applies. In the case of very small motion with, for example, "talking heads" picture material, the high gain of multiplier 24 ensures that information regarding the motion is still made use of. The clip limit in block 26 may not be reached and the rate of change of the detector output will therefore be slow.

In the case of film originating material, the output from subtracter 22 will be expected to be zero or negative. In an analogous manner, the first clip limit of - 5 and the accumulated clip limit of - 25 will apply and an output of -25 can be identified with film originating material. It will be noted that an output of zero is taken simply to mean "don't know".

The five-fold relationship between the clip limits of block 26 and 30 have been selected to govern the delay after which the detector switches between video originating and film originating material in the "ideal" case of a cut between constant motion film and constant motion video. If a longer delay is appropriate, a ten-fold or greater differential between the two clip limits can be employed.

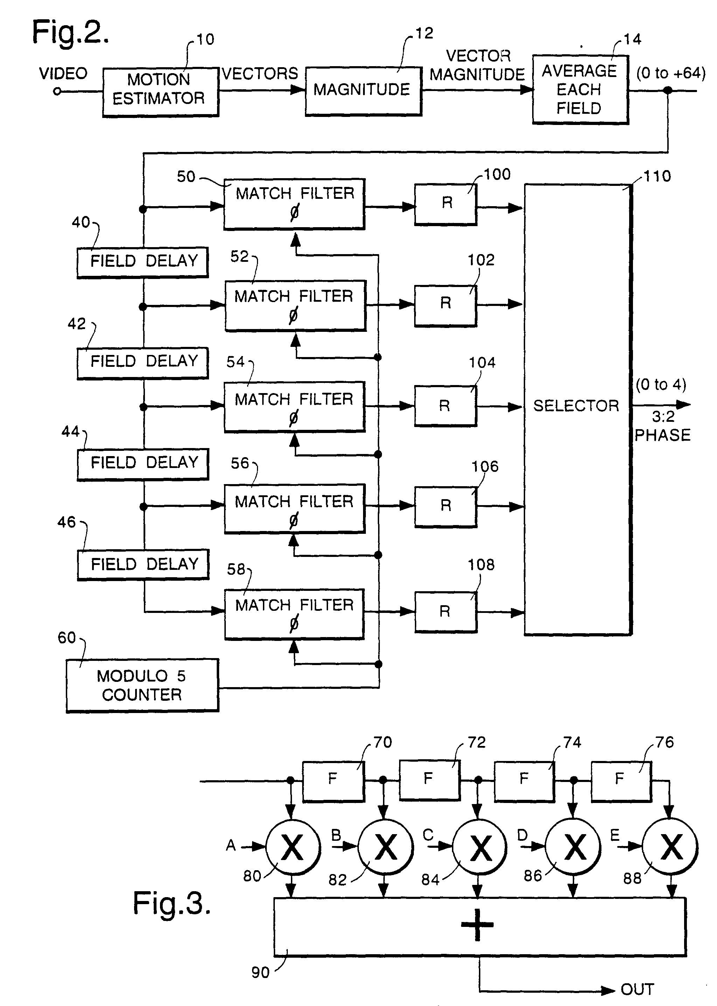

Turning now to Figures 2 and 3, there is shown a further embodiment of the present invention which is capable of identifying the phase of the 3:2 sequence in 60 Hz NTSC material originated on film and subjected to a 3:2 pulldown. Certain components are shared in common with the embodiment of Figure 1. These components have the same reference numerals and will not be described in any more detail.

The output from block 14, which is a motion parameter in the form of an average motion vector for the field, is taken to a chain of field delays 40-46 These feed in turn an array of match filters 50-58, clocked at field rate by means of a modulo 5 counter 60.

Referring now to Figure 3, there is shown in more detail the structure of each match filter 50-58. It will be seen that the input to the match filter is taken to a chain of field delays 70-76 which feed multipliers 80-88. The coefficients A to E supplied to these multipliers, vary in the clock cycle as follows:-

| | **A** | **B** | **C** | **D** | **E** |
|---|---|---|---|---|---|
| 0 | +1 | -1 | +1 | -1 | -1 |
| 1 | -1 | +1 | -1 | +1 | -1 |
| 2 | -1 | -1 | +1 | -1 | +1 |
| 3 | +1 | -1 | -1 | +1 | -1 |
| 4 | -1 | +1 | +1 | -1 | +1 |

The output of the multipliers 80-88 are taken through adder 90 which generates the output for the match filter.

Returning to Figure 2, the outputs of the match filters are taken through respective recursive filters 100-108 which generate the five inputs for selector 110. The function of this selector is to pick the largest output from the recursive filters 100-108. In the ideal case, only one output will be positive. There is preferably hysteresis built into the selector 110 so that short term shifts in the ranking of the inputs, arising from noise, are ignored. The coefficient sequence of the selected match filter indicates the field sequence of the input video.

It should be understood that this invention has been described by way of example and a wide variety of modifications are possible without departing from the scope of the invention. Whilst the example has been taken of 3:2 pulldown, the method of the invention is capable of, more generally, detecting the residual effect of a past conversion from a lower temporal sampling rate involving the repetition of images.

## Claims

1. A method of detecting, in a video signal having a particular temporal sampling rate, the residual effect of a past conversion from a lower temporal sampling rate involving the repetition of images, comprising the steps of measuring a motion parameter between successive images, determining a difference value between successive measured motion parameters; comparing the motion parameter and difference values and accumulating the results of said comparison.

2. A method according to Claim 1, wherein the step of measuring a motion parameter between successive images comprises identifying a plurality of motion vectors associated with respective regions of the image and taking the average magnitude of the motion vectors.

3. A method according to Claim 1 or Claim 2, wherein the step of accumulating the results of said comparison comprises monitoring a trend in the sign of the comparison.

4. Apparatus for detecting, in a video signal having a particular temporal sampling rate, the residual effect of a past conversion from a lower temporal sampling rate involving the repetition of images, comprising means for measuring a motion parameter between successive images, means for determining a difference value between successive measured motion parameters; means for comparing the motion parameter and difference values and means for accumulating the results of said comparison.

5. Apparatus according to Claim 4, wherein the means for measuring a motion parameter between successive images serves to split a picture into blocks, to measure a motion vector between these blocks in successive images and to calculate an average vector magnitude from the motion vectors measured between each pair of successive images.

6. Apparatus according to Claim 5, wherein said means for comparing the motion parameter and difference values serves to subtract the magnitude of the temporal differential of the average vector magnitude from the average vector magnitude.

7. A method according to any one of Claims 1, 2 and 3 further comprising the steps of storing a sequence of measured motion parameters for successive fields; comparing the pattern of motion parameters with known patterns associated respectively with different phases of the 3:2 pulldown field duplicating and reordering sequence and selecting the phase providing the closest match.

8. Apparatus according to any one of Claims 4, 5 and 6 further comprising means for storing a sequence of measured motion parameters for successive fields; means for comparing the pattern of motion parameters with known patterns associated respectively with different phases of the 3:2 pulldown field duplicating and reordering sequence and means selecting the phase providing the closest match.

9. Apparatus according to Claim 8, wherein said means for comparing the pattern of motion parameters with known patterns associated respectively with different phases of the field duplicating and reordering sequence comprises five match filters receiving said sequence of measured motion parameters delayed by one field interval from one match filter to the next.

## Patentansprüche

1. Verfahren, um in einem Videosignal mit einer bestimmten zeitlichen Abtastrate den Resteffekt einer vergangenen Umwandlung von einer niedrigeren zeitlichen Abtastrate zu detektieren, wobei die Wiederholung von Bildern beteiligt ist, mit den Schritten, dass ein Bewegungsparameter zwischen aufeinanderfolgenden Bildern gemessen wird, dass ein Differenzwert zwischen aufeinanderfolgend gemessenen Bewegungsparametern bestimmt wird; dass der Bewegungsparameter und die Differenzwerte verglichen werden und dass die Ergebnisse des Vergleichs aufsummiert werden.

2. Verfahren nach Anspruch 1, bei dem der Schritt zum Messen eines Bewegungsparameters zwischen aufeinanderfolgenden Bildern eine Identifizierung einer Anzahl von Bewegungsvektoren, die jeweiligen Bereichen des Bildes zugeordnet sind, und eine Bildung der mittleren Größe der Bewegungsvektoren umfasst.

3. Verfahren nach Anspruch 1 oder Anspruch 2, bei dem der Schritt zum Aufsummieren der Ergebnisse des Vergleichs eine Überwachung eines Trends in dem Vorzeichen des Vergleichs umfasst.

4. Vorrichtung, um in einem Videosignal mit einer bestimmten zeitlichen Abtastrate den Resteffekt einer vergangenen Umwandlung von einer niedrigeren zeitlichen Abtastrate zu detektieren, wobei die Wiederholung von Bildern beteiligt ist, umfassend eine Einrichtung zum Messen eines Bewegungsparameters zwischen aufeinanderfolgenden Bildern, eine Einrichtung zum Bestimmen eines Differenzwertes zwischen aufeinanderfolgend gemessenen Bewegungsparametern; eine Einrichtung zum Vergleichen des Bewegungsparameters und der Differenzwerte sowie eine Einrichtung zum Aufsummieren der Ergebnisse des Vergleichs.

5. Vorrichtung nach Anspruch 4, bei der die Einrichtung zum Messen eines Bewegungsparameters zwischen aufeinanderfolgenden Bildern dazu dient, um ein Bild in Blöcke aufzuteilen, um einen Bewegungsvektor zwischen diesen Blöcken in aufeinanderfolgenden Bildern zu messen und eine mittlere Vektorgröße von den Bewegungsvektoren, die zwischen jedem Paar von aufeinanderfolgenden Bildern gemessen werden, zu berechnen.

6. Vorrichtung nach Anspruch 5, bei der die Einrichtung zum Vergleichen des Bewegungsparameters und der Differenzwerte dazu dient, um die Größe des zeitlichen Differentials der mittleren Vektorgröße von der mittleren Vektorgröße zu subtrahieren.

7. Verfahren nach einem der Ansprüche 1, 2 und 3, weiterhin umfassend die Schritte eines Speicherns einer Sequenz von gemessenen Bewegungsparametern für aufeinanderfolgende Halbbilder; eines Vergleichs des Musters von Bewegungsparametern mit bekannten Mustern, die jeweils verschiedenen Phasen der Duplizierungs- und Umordnungssequenz eines um 3:2 frequenzgewandelten Halbbilds zugeordnet sind, und eines Vergleichs der Phase, die die beste Übereinstimmung bereithält.

8. Vorrichtung nach einem der Ansprüche 4, 5 und 6, weiterhin umfassend eine Einrichtung zum Speichern einer Sequenz von gemessenen Bewegungsparametern für aufeinanderfolgende Halbbilder; eine Einrichtung zum Vergleichen des Musters von Bewegungsparametern mit bekannten Mustern, die jeweils verschiedenen Phasen einer Duplizierungs- und Umordnungssequenz des um 3:2 frequenzgewandelten Halbbilds zugeordnet sind, sowie eine Einrichtung zum Auswählen der Phase, die die beste Übereinstimmung bereithält.

9. Vorrichtung nach Anspruch 8, bei der die Einrichtung zum Vergleichen des Musters von Bewegungsparametern mit bekannten Mustern, die jeweils verschiedenen Phasen der Duplizierungs- und Umordnungssequenz zugeordnet sind, fünf Treffer- bzw. Übereinstimmungsfilter umfasst, die die Sequenz von gemessenen Bewegungsparametern empfängt, die von einem Treffer- bzw. Übereinstimmungsfilter zu dem nächsten um ein Halbbildintervall verzögert sind.

## Revendications

1. Procédé de détection, dans un signal vidéo ayant une cadence temporelle d'échantillonnage particulière, de l'effet résiduel d'une conversion passée à partir d'une cadence temporelle d'échantillonnage plus lente impliquant la répétition d'images, comprenant les étapes consistant à mesurer un paramètre de mouvement entre des images successives, déterminer une valeur de différence entre des paramètres de mouvement mesurés successifs, comparer les valeurs de paramètres de mouvement et de différences et cumuler les résultats de ladite comparaison.

2. Procédé selon la revendication 1, dans lequel l'étape de mesure de paramètre de mouvement entre des images successives consiste à identifier une pluralité de vecteurs de mouvement associés à des régions respectives de l'image et à prendre la moyenne des vecteurs de mouvement.

3. Procédé selon la revendication 1 ou la revendication 2, dans lequel l'étape de cumul des résultats de ladite comparaison consiste à surveiller une tendance du signe de la comparaison.

4. Dispositif pour détecter, dans un signal vidéo ayant une cadence temporelle d'échantillonnage particulière, l'effet résiduel d'une conversion passée à partir d'une cadence temporelle d'échantillonnage plus lente impliquant la répétition d'images, comprenant un moyen pour mesurer un paramètre de mouvement entre des images successives, un moyen pour déterminer une valeur de différence entre des paramètres de mouvement mesurés successifs, un moyen pour comparer les valeurs de paramètres de mouvement et de différences et un moyen pour cumuler les résultats de ladite comparaison.

5. Dispositif selon la revendication 4, dans lequel le moyen pour mesurer un paramètre de mouvement entre des images successives sert à diviser une image en blocs, à mesurer un vecteur de mouvement entre ces blocs dans des images successives et à calculer une valeur moyenne de vecteurs à partir des vecteurs de mouvement mesurés entre chaque paire d'images successives.

6. Dispositif selon la revendication 5, dans lequel ledit moyen pour comparer les valeurs des paramètres de mouvement et de différences sert à soustraire, de la valeur moyenne de vecteurs, la valeur de la différence temporelle de la valeur moyenne de vecteurs.

7. Procédé selon l'une quelconque des revendications 1, 2 et 3, comprenant en outre les étapes consistant à mémoriser une suite de paramètres de mouvement mesurés pour des trames successives, comparer la configuration de paramètres de mouvement avec des configurations connues correspondant respectivement à des phases différentes de la séquence de duplication et de réorganisation de trame à mouvement intermittent de 3/2 et choisir la phase offrant la meilleure correspondance.

8. Dispositif selon l'une quelconque des revendications 4, 5 et 6, comprenant en outre un moyen pour mémoriser une suite de paramètres de mouvement mesurés pour des trames successives, un moyen pour comparer la configuration de paramètres de mouvement avec des configurations connues correspondant respectivement à des phases différentes de la séquence de duplication et de réorganisation de trame à mouvement intermittent de 3/2 et un moyen pour choisir la phase offrant la meilleure correspondance.

9. Dispositif selon la revendication 8, dans lequel ledit moyen pour comparer la configuration de paramètres de mouvement avec des configurations connues correspondant respectivement à des phases différentes de la séquence de duplication et de réorganisation de trame comporte cinq filtres adaptatifs recevant ladite séquence de paramètres de mouvement mesurés retardés d'un intervalle de trame d'un filtre adaptatif à l'autre.
